# EUROPÄISCHE PATENTANMELDUNG

(11) **EP 4 389 411 A1**
(43) Veröffentlichungstag der Anmeldung: **26.06.2024**
(21) Anmeldenummer: 23216581.1
(22) Anmeldetag: 14.12.2023
(51) Int. Cl.: B32B 1/08, B32B 7/12, B32B 27/08, B32B 27/10, B32B 27/30, B32B 27/32, B65D 65/40

(54) **MEHRLAGIGES TUBENLAMINAT MIT PAPIERLAGE UND DARAUF ANGEORDNETER SCHUTZSCHICHT, TUBENKÖRPER UND TUBE**

(30) Priorität: 19.12.2022 DE 102022133958
(71) Anmelder: Huhtamaki Flexible Packaging Germany GmbH & Co. KG, 87671 Ronsberg (DE)
(72) Erfinder: Schulz, Detlev, 87463 Dietmannsried (DE); Drexler, Daniel, 87490 Haldenwang (DE); Lacher, Reinhard, 87671 Ronsberg (DE)
(74) Vertreter: Ruttensperger Lachnit Trossin Gomoll

(57) **Zusammenfassung**

Die vorliegende Erfindung betrifft ein mehrlagiges Tubenlaminat (10; 110) zur Herstellung eines Tubenbehälters, umfassend
- wenigstens eine Papierlage (12),
- eine siegelfähige freiliegende Polymerlage (16, 22) auf einer Seite (12a) der wenigstens einen Papierlage (12), und
- eine auf einer von der siegelfähigen Polymerlage (16, 22) abgewandten anderen Seite (12b) der wenigstens einen Papierlage (12) unmittelbar auf die wenigstens eine Papierlage (12) aufgetragene Polymerschicht (24) aus einem Material auf Olefinbasis.

Erfindungsgemäß ist vorgesehen, dass die Polymerschicht (24) eine Polymerschutzschicht (24) mit einem Flächengewicht im Bereich von 0,5 g/m² bis 4,9 g/m² ist, wobei die Polymerschutzschicht (24) entweder nach außen freiliegt oder einen Druckauftrag trägt.

## Beschreibung

Die vorliegende Erfindung betrifft ein mehrlagiges Tubenlaminat zur Herstellung eines Tubenbehälters, umfassend
- wenigstens eine Papierlage,
- eine siegelfähige freiliegende Polymerlage auf einer Seite der wenigstens einen Papierlage, und
- eine auf einer von der siegelfähigen Polymerlage abgewandten anderen Seite der wenigstens einen Papierlage unmittelbar auf die wenigstens eine Papierlage aufgetragene Polymerschicht aus einem Material auf Olefinbasis.

Ein solches Tubenlaminat ist aus der WO 2015/061980 A1 bekannt. Die aus dieser Druckschrift bekannte Polymerbeschichtung der Papierlage weist eine Dicke von 5 bis 25 µm auf und dient der Verbindung einer am Tubenlaminat des Standes der Technik zwingend vorhandenen äußeren Siegellage mit der einzigen Papierlage. Zwischen der äußeren Siegellage und der Polymerbeschichtung kann noch eine weitere Haftvermittlerlage aus im Wesentlichen demselben Material wie die Polymerbeschichtung aufgetragen sein.

Die WO 2015/061980 A1 beschäftigt sich mit der Vermeidung oder Verringerung von Plastikmüll, welcher aus der Verwendung von Tuben als Behälter für Pasten und Gele nach Ablauf ihrer Gebrauchsdauer resultiert. Hierzu schlägt die WO 2015/061980 A1 vor, den Plastik-, also Polymeranteil, im Tubenlaminat zu verringern und lehrt hierzu die Anordnung einer Papierlage anstelle einer Polymerlage im Tubenlaminat.

Aus der WO 2021/053043 A1 ist ein Tubenlaminat mit wenigstens zwei Papierlagen bekannt, welches entweder an einer Außenseite unmittelbar eine freiliegende Papierlage aufweist oder eine siegelfähige Polyolefinlage. Ein Tubenlaminat mit freiliegender Papierlage ist praktisch unbrauchbar, da eine Tube in der Regel ein wiederverschließbarer Behälter ist, welcher mehrfach geöffnet und geschlossen wird, sodass eine nach außen freiliegende Papierlage durch Feuchtigkeit oder/und Fett oder/und Schmutz belastet wäre. Eine nach innen freiliegende Papierlage würde sich sehr rasch mit Inhaltsstoffen des fließfähigen Tubeninhalts vollsaugen.

Ebenso wenig als Tubenlaminat brauchbar ist die in der WO 2021/053043 A1 gelehrte Lagenfolge mit freiliegender EVOH-Barrierelage. EVOH ist in der Regel hydrophil und sollte daher vor Feuchtigkeit und Wasser abgeschirmt sein.

Daher handelt es sich bei den in der WO 2021/053043 A1 offenbarten Tubenlaminaten mit freiliegender Papierlage und mit freiliegender EVOH-Barrierelage vermutlich um Laminat-Vorprodukte, welche durch Anordnung weiterer Lagen noch zu einem einsatzfähigen Tubenlaminat zu vervollständigen sind.

Nachteilig an den bekannten tatsächlich einsetzbaren Tubenlaminaten mit Papierlage des Standes der Technik ist die auf der Außenseite des Tubenlaminats vorgesehene siegelfähige Polymerlage. Mit dem Begriff einer "Außenseite des Tubenlaminats" ist vorliegend jene Seite des Tubenlaminats bezeichnet, welche an der daraus gebildeten Tube bzw. Tubenbehälter die Außenseite bildet.

Die siegelfähige Polymerlage weist im Falle der WO 2015/061980 A1 eine Dicke von wenigstens 30 µm auf, wobei die tatsächlich verwendete Dicke eher in einem offenbarten bevorzugten Bereich von 39 bis 45 µm liegt.

Die aus der WO 2021/053043 A1 bekannten gebrauchsfertigen Tubenlaminate weisen ebenfalls eine an ihrer Außenseite liegende siegelfähige Polymerlage aus LDPE mit einer Dicke von 30 µm auf.

Derartige Siegellagen an der Außenseite des Tubenlaminats verhindern in Sortieranlagen eine automatisierte Erkennung der Papierlage. Eine derartige automatisierte Erkennung der Papierlage erfolgt in an sich bekannter Weise durch Verwendung von Nah-Infrarottechnik.

Dann, wenn der Papiergehalt eines Tubenlaminats ausreichend hoch ist, kann das Tubenlaminat vorteilhaft in einem Papier-Recyclingstrom recycelt werden. Hierfür ist jedoch die automatisierte Erkennbarkeit des Laminats als ausreichend papierhaltiges Tubenlaminat wichtig. Diese Erkennbarkeit ist optisch im sichtbaren Spektralbereich aufgrund von Druckauftrag oder/und Einfärbung außenliegender Polymerlagen in der Regel nicht gegeben, da der Druckauftrag oder/und die Einfärbung einen Blick auf eine der Außenseite des Tubenlaminats nächstgelegene Papierlage abschirmt.

In vielen Ländern bzw. in vielen Fällen führt eine fehlerhafte Erkennung eines entsorgten Tubenbehälters nicht zu einer Wiederverwertung der entsorgten Tube, sondern zu deren thermischer Verwertung unter Bildung von Kohlendioxid oder zu einer Ablage in einer bodengebundenen Deponie, wo die entsorgte Tube über Jahrzehnte verbleibt.

Es ist daher Aufgabe der vorliegenden Erfindung, den Stand der Technik betreffend Tubenlaminate dahingehend zu verbessern, dass eine automatisierte Erkennung des Tubenlaminats bzw. eines daraus gebildeten Tubenbehälters als papierhaltig möglich ist, wobei gleichzeitig eine Papieroberfläche der wenigstens einen Papierlage von außen nicht zugänglich sein soll.

Diese Aufgabe löst die vorliegende Erfindung an einem eingangs genannten Tubenlaminat dadurch, dass die Polymerschicht eine Polymerschutzschicht mit einem Flächengewicht im Bereich von 0,5 g/m² bis 4,9 g/m² ist, und die Polymerschutzschicht entweder nach außen freiliegt oder einen Druckauftrag trägt.

Durch den Auftrag der Polymerschicht als Polymerschutzschicht kann die unbeeinträchtigte Verwendung einer aus dem Tubenlaminat gebildeten Tube als wiederverschließbare Verpackung sichergestellt sein, da während der Aufbewahrung oder der Verwendung der Tube deren Außenfläche erreichende Feuchtigkeit, Schmutz oder auch Fett durch die Polymerschutzschicht von der sie tragenden Papierlage abgehalten wird.

Gleichzeitig ist die Polymerschutzschicht mit einem Flächengewicht von weniger als 5 g/m² so dünn, dass die derzeit bekannten Verfahren zur Erkennung der unter der Polymerschutzschicht liegenden Papierlage ohne Beeinträchtigung anwendbar sind. Dies gilt auch dann noch, wenn die Polymerschutzschicht keine freiliegende Oberfläche des Tubenlaminats und somit der daraus gebildeten Tube bildet, sondern noch einen Druckauftrag trägt, etwa um Verbraucherinformationen auf der Außenseite des Tubenlaminats bzw. der daraus gebildeten Tube für einen Verbraucher von außen wahrnehmbar anzubringen. Druckaufträge sind in der Regel ebenfalls sehr dünn, etwa mit Dicken im einstelligen Mikrometerbereich, sodass selbst ein auf die Polymerschutzschicht aufgetragene Druckauftrag die automatisierte Erkennung des Tubenlaminats als papierhaltig nicht beeinträchtigt.

Bevorzugt ist also die Polymerschutzschicht oder sind die Polymerschutzschicht und der Druckauftrag, gegebenenfalls unter Zwischenanordnung einer Primerlage zwischen Polymerschutzschicht und Druckauftrag zur Erhöhung der Haftung des Druckauftrags auf der Polymerschutzschicht, die einzigen auf der einen Seite der Papierlage angeordneten Lagen des Tubenlaminats. Erforderlichenfalls kann auch zwischen der Papierlage und der Polymerschutzschicht eine Primerlage zur Erhöhung der Haftung der Polymerschutzschicht an der Papierlage angeordnet sein. Bevorzugt ist die Polymerschutzschicht jedoch unmittelbar auf die Papierlage aufgetragen und kontaktiert diese.

Die dünne Ausbildung der Polymerschutzschicht und der Verzicht auf daran in Richtung von der wenigstens einen Papierlage weg anschließende, erheblich dickere Polymer-Siegellagen ermöglicht nicht nur die oben beschriebene automatisierte Erkennung der Papierlage im Tubenlaminat und dementsprechend eine automatisierte Zuordnung des Tubenlaminats zu einem Papier zugeordneten Recyclingstrom, sondern hilft auch, einen möglichst hohen Gewichtsanteil von Papier im Tubenlaminat zu erzielen.

Ein unmittelbarer Auftrag der Polymerschutzschicht ohne Zwischenanordnung einer Primerlage ist in vorteilhafter Weiterbildung der vorliegenden Erfindung dann besonders einfach möglich, wenn die Polymerschutzschicht wenigstens ein säure-modifiziertes Olefin, insbesondere Polyolefin, umfasst oder aus einem solchen besteht. Bevorzugt kann die Polymerschutzschicht wenigstens ein Copolymer aus Ethylen-Methacrylsäure-Copolymer und Ethylen-Methacrylat-Copolymer umfassen oder aus einem solchen bestehen. Besonders bevorzugt umfasst die Polymerschutzschicht ein Ethylen-Methacrylsäure-Copolymer oder besteht aus einem solchen. Die genannten Copolymere bieten einerseits guten Schutz gegen jegliche Einwirkung auf das Tubenlaminat, insbesondere auf die wenigstens eine Papierlage derselben, ausgehend von der Außenumgebung des Tubenlaminats. Andererseits bieten die genannten Copolymere, vor allem das besonders bevorzugte Ethylen-Methacrylsäure-Copolymer, eine hohe Haftwirkung mit dem Papier der Papierlage und auch mit anderen Polymeren, sodass die genannten Copolymere trotz ihrer dünnen Schichtausbildung mit einem Flächengewicht von 4,9 g/m² oder weniger Grundlage für eine Siegelung mit der siegelfähigen Polymerlage auf der einen Seite der wenigstens einen Papierlage oder mit einem gesonderten Siegelstreifen, wie er weiter unten beschrieben ist, sein kann.

In einer bevorzugten Weiterbildung der vorliegenden Erfindung weist die Polymerschutzschicht ein Flächengewicht im Bereich von 1 g/m² bis 2,5 g/m² auf. Dies reicht aus um die Papierlage vor äußeren Einflüssen zu schützen und verbessert die Erkennungsqualität eine automatisierten Erkennung der Papierlage weiter, insbesondere wenn auf die Polymerschutzschicht noch ein Druckauftrag aufgetragen ist, wie es für Tubenlaminate an deren Außenseite üblich ist.

Bevorzugt ist daher die oben genannte eine Seite des Tubenlaminats mit der siegelfähigen Polymerlage eine Innenseite des Tubenlaminats und ist die oben genannte andere Seite des Tubenlaminats mit der Polymerschutzschicht bzw. mit dem Druckauftrag eine Außenseite des Tubenlaminats.

Zur ausreichenden Information von Verbrauchern über Inhalt, Menge und Herkunft und dergleichen einer in dem aus dem Tubenlaminat erzeugten jeweiligen Tubenbehälter verpackten Substanz trägt die Polymerschutzschicht, wie oben dargelegt, bevorzugt den Druckauftrag. Weiter bevorzugt ist der Druckauftrag unmittelbar auf die Polymerschutzschicht, diese kontaktierend, aufgetragen. Erforderlichenfalls kann jedoch eine dünne Primerschicht mit einer Dicke im einstelligen Mikrometerbereich, etwa mit einer Dicke von zwischen 0,5 bis 6 µm, zwischen Druckauftrag und Polymerschutzschicht aufgetragen sein um die Haftung des Druckauftrags an der Polymerschutzschicht zu erhöhen.

Der Druckauftrag ist weiter bevorzugt gebildet aus einer Lage Überdrucklack und einem zwischen der Überdrucklack-Lage und der Polymerschutzschicht angeordneten Lagenbereich aus Druckfarben. Der Überdrucklack dient dem Schutz der Druckfarben gegen Einflüsse aus der Außenumgebung.

Bevorzugt liegt der Überdrucklack mit seiner von der wenigstens einen Papierlage abgewandten Oberfläche frei und bildet somit bevorzugt eine Außenfläche des Tubenlaminats und der daraus gebildeten Tube.

Als besonders widerstandsfähiger Überdrucklack hat sich ein Lack auf Acrylbasis erwiesen, welche deshalb bevorzugt als Überdrucklack gewählt ist.

Ein solcher Druckauftrag, also Druckfarben plus Überdrucklack, weist bevorzugt eine Dicke von weniger als 3 µm auf. So ist sichergestellt, dass der Druckauftrag gemeinsam mit der Polymerschutzschicht und gegebenenfalls einer zwischenangeordneten Primerschicht die automatisierte Erfassung der Papierlage als solche bzw. die Erfassung des Tubenlaminats als papierhaltig mittels Bestrahlung durch Nah-Infrarot-Strahlung nicht stört.

Bevorzugt sind ausgehend von der der anderen Seite nächstgelegenen Oberfläche der wenigstens einen Papierlage über der Papierlage nicht mehr als 12 µm, besonders bevorzugt nicht mehr als 9 µm und noch stärker bevorzugt nicht mehr als 6 µm an weiterem Schichtmaterial bis zu einer freiliegenden Oberfläche des Tubenlaminats insgesamt ausgebildet. Das weitere Schichtmaterial umfasst bevorzugt nur die Polymerschutzschicht und den Druckauftrag, gegebenenfalls unter Zwischenanordnung einer Primerlage. Ohne den Druckauftrag sind bevorzugt auf der der anderen Seite nächstgelegenen Oberfläche der Papierlage nicht mehr als die oben genannten maximal 4,9 g/m² an Polymerschutzschicht aufgetragen. Die Polymerschutzschicht bildet dann eine freie Oberfläche des Tubenlaminats.

Grundsätzlich kann die siegelfähige freiliegende Polymerlage, welche bevorzugt die Innenseite des Tubenlaminats bildet, aus einem beliebigen siegelfähigen Polymer, insbesondere aus einem siegelfähigen Polyolefin, insbesondere Polyethylen, gebildet sein. Als siegelfähige Polyolefine sind bevorzugt LMDPE und LLDPE oder ein Blend aus LMDPE und HDPE vorgesehen. Eine vorteilhafte zusätzliche Barrierelage gegen Migration von flüchtigen Substanzen, wie etwa Aromen, kann vorteilhaft ohne zusätzliche weitere Lage dadurch erzielt werden, dass die siegelfähige freiliegende Polymerlage ein Cyclo-Olefin-Copolymer umfasst oder aus einem solchen besteht. Beispielsweise kann die freiliegende siegelfähige Polymerlage ein Blend aus Cyclo-Olefin-Copolymer und einer Varietät von PE sein, etwa LDPE oder LLDPE. Gerade Aromastoffe sind in in Tuben verpackten Substanzen häufig anzutreffen, da Tuben häufig zur Verpackung von Kosmetik- oder Lifestyle-Produkten eingesetzt werden.

Zur Verhinderung von Migration von Sauerstoff oder/und von Wasserdampf durch das Tubenlaminat hindurch kann das Tubenlaminat bevorzugt wenigstens eine Barrierelage aufweisen. Die wenigstens eine Barrierelage umfasst bevorzugt ein Vinylalkohol-Polymer oder/und eine Metallisierung oder/und ein Metalloxid oder ist aus einem solchen Material gebildet.

Bevorzugt weist das Tubenlaminat über seine Gesamtdicke eine Sauerstoffdurchlässigkeit von nicht mehr als 1,0, vorzugsweise von nicht mehr als 0,85 cm³/(m²·d·bar), ermittelt gemäß DIN 53380-3 bei 23°C und 85% relativer Feuchte, und eine Wasserdampfdurchlässigkeit von nicht mehr als 1,0, vorzugsweise von nicht mehr als 0,85 g/(m²·d), ermittelt gemäß ISO 15106-2 bei 23°C und 85% relativer Feuchte auf.

Als Vinylalkohol-Copolymer mit der gewünschten Barrierewirkung kann Ethylen-Vinylalkohol-Copolymer, Polyvinylalkohol oder Butendiol-Vinylalkohol-Copolymer verwendet werden. Eine solche Vinylalkohol-Polymer-Barrierelage kann beispielsweise zwischen der wenigstens einen Papierlage und einer Polymerlage, insbesondere Polyolefinlage, besonders bevorzugt Polyethylenlage oder Cyclo-Olefin-Copolymer-haltiger Lage auf der einen Seite der wenigstens einen Papierlage angeordnet sein. So kann die Vinylalkohol-Polymer-Barrierelage gemäß einer Ausführungsform der vorliegenden Erfindung zwischen der wenigstens einen Papierlage und der siegelfähigen Polymerlage angeordnet sein.

Weiter kann zwischen der Vinylalkohol-Polymer-Barrierelage und der wenigstens einen Papierlage eine weitere Polymerlage angeordnet sein, etwa aus einem die Haftung der Barrierelage an der Papierlage erhöhenden Polymer.

Auf der einen Seite der Papierlage, also auf der von der Polymerschutzschicht abgewandten Seite der Papierlage, kann in der Lagenfolge des Tubenlaminats erforderlichenfalls eine oder mehrere Haftvermittlerlagen angeordnet sein.

Eine Metallisierung ist bevorzugt als aus einer Dampfphase abgeschiedene Metallisierungsschicht ausgebildet. Diese kann unmittelbar auf die wenigstens eine Papierlage abgeschieden sein. Sofern die wenigstens eine Papierlage mehr als eine Papierlage umfasst, ist die Metallisierungsschicht bevorzugt auf eine weitere Papierlage abgeschieden, welche mit Abstand von der der Polymerschutzschicht nächstgelegenen Papierlage angeordnet ist. Grundsätzlich spielt es für die Barrierewirkung der Metallisierung keine Rolle ob die Metallisierung auf der der siegelfähigen Polymerlage nähergelegenen Seite oder auf der der Polymerschutzschicht näher gelegenen Seite der weiteren Papierlage angeordnet ist. Da jedoch die Metallisierung in der Regel eine Migration von Sauerstoff und Wasserdampf aus der Außenumgebung in den Verpackungsraum eines Tubenbehälters verhindern soll, ist die Metallisierung bevorzugt auf der der Polymerschutzschicht zugewandten Seite der weiteren Papierlage angeordnet.

Als aus der Dampfphase, etwa durch Vakuumdampfabscheidung, niedergeschlagenes Metall kann jegliches Metall verwendet werden. Bevorzugt wird zur Bildung der Metallisierung Aluminium oder eine Aluminiumlegierung verwendet.

Für eine Barriereschicht aus Metalloxid, häufig auch als "keramische" Barriereschicht bezeichnet, gilt das oben zur Metallisierung Gesagte mutatis mutandis. Auch die Barriereschicht aus Metalloxid ist bevorzugt aus einer Dampfphase, beispielsweise durch Vakuumdampfabscheidung, auf einem Substrat abgeschieden, bevorzugt auf einer weiteren Papierlage. Als Metalloxid zur Ausbildung der Barriereschicht kommen wenigstens ein Metalloxid aus Aluminiumoxid und Siliziumoxid infrage.

Eine aus der Dampfphase abgeschiedene Barriereschicht aus Metall oder Metalloxid kann abweichend von der obigen Darstellung mit einer Papierlage als Substratschicht auch auf eine Polymerfolie abgeschieden sein, welche durch Adhäsionslamination mittels lösemittelbbasiertem Klebstoff oder durch Extrusionslamination mittels thermisch erweichtem thermoplastischem Kunststoff mit einer anderen Lage des Tubenlaminats, insbesondere mit der wenigstens einen Papierlage, verbunden sein kann.

Das vorliegende Tubenlaminat weist bevorzugt ein Flächengewicht im Bereich von 200 g/m² bis 450 g/m² auf, um ausreichend Stabilität eines Tubenbehälters ohne unnötiges Verpackungsgewicht bereitstellen zu können.

Bevorzugt liegt das Flächengewicht der wenigstens einen Papierlage im Tubenlaminat im Bereich von 80 g/m² bis 350 g/m².

Zur Wiederverwertung des Tubenlaminats in einem Papier zugeordneten Recyclingstrom ist es bevorzugt, wenn der Gewichtsanteil der wenigstens einen Papierlage am flächenbezogenen Gesamtgewicht des Tubenlaminats wenigstens 75 % beträgt. Besonders bevorzugt beträgt der Gewichtsanteil der wenigstens einen Papierlage am flächenbezogenen Gesamtgewicht des Tubenlaminats wenigstens 80 %, noch stärker bevorzugt wenigstens 85 %.

Das Tubenlaminat kann genau eine Papierlage aufweisen. Deren Flächengewicht liegt dann bevorzugt im Bereich von 120 bis 250 g/m², bevorzugt von 150 bis 200 g/m². Das Tubenlaminat kann auch mehr als eine Papierlage aufweisen. Bevorzugt trägt dann eine der Papierlagen die oben genannte Barrierelage.

Die vorliegende Erfindung betrifft weiter einen Tubenkörper, welcher aus einem Tubenlaminat gebildet ist, wie es oben beschrieben und weitergebildet ist.

Der Tubenkörper umfasst einen Tubenlaminat-Rohling, welcher in an sich bekannter Weise um eine Tubenkörperlängsachse herum gerollt ist, wobei die in Umfangsrichtung um die Tubenkörperlängsachse aufeinander zu weisenden Endbereiche des Tubenlaminat-Rohlings durch Siegeln unter Ausbildung einer in Richtung längs der Tubenkörperlängsachse verlaufenden Siegelnaht miteinander verbunden sind. Der Tubenkörper kann wenigstens abschnittsweise längs der Tubenkörperlängsachse einen hinsichtlich Gestalt oder/und Größe konstanten in einer zur Tubenkörperlängsachse orthogonalen Schnittebene zu betrachtenden Lumenquerschnitt aufweisen oder/und der Tubenkörper kann wenigstens abschnittsweise einen sich längs der Tubenkörperlängsachse vergrößernden Lumenquerschnitt aufweisen. Der Lumenquerschnitt ist die vom Tubenkörper in der jeweiligen zur Tubenkörperlängsachse orthogonalen Schnittebene eingefasste Fläche.

Aufgrund des um die Tubenkörperlängsrichtung umlaufenden Tubenkörpers definiert die Tubenkörperlängsachse eine parallel zu ihr verlaufende axiale Richtung, eine um sie umlaufende Umfangsrichtung und orthogonal von ihr weg verlaufende radiale Richtungen.

Die Siegelnaht kann entweder
i) eine Überlapp-Siegelnaht sein, bei welcher die siegelfähige Polymerlage die Polymerschutzschicht in einem Überlappungsbereich überlappt, wobei der Überlappungsbereich sich in Umfangsrichtung und in Richtung längs der Tubenkörperlängsachse erstreckt und wobei die siegelfähige Polymerlage und die Polymerschutzschicht im Überlappungsbereich miteinander stoffschlüssig verbunden sind,
   oder kann
ii) eine Stoß-Siegelnaht sein, bei welcher die aufeinander zu weisenden Endbereiche unter Bildung einer in Richtung längs der Tubenkörperlängsachse und radial von der Tubenkörperlängsachse weg verlaufenden Stoßfuge einander stumpf angenähert sind, wobei die Stoßfuge auf wenigstens einer radialen Seite bezüglich der Tubenkörperlängsachse durch einen Siegelstreifen überdeckt ist, welcher sich längs der Stoßfuge erstreckt, die Stoßfuge in Umfangsrichtung überspannt und zu beiden Umfangsseiten der Stoßfuge mit je einem freiliegenden Oberflächenabschnitt stoffschlüssig verbunden ist.

Bevorzugt ist auf beiden radialen Seiten der Stoßfuge je ein Siegelstreifen vorgesehen, welcher sich längs der Stoßfuge, diese überdeckend, erstreckt, und welcher in Umfangsrichtung beiderseits der Stoßfuge mit je einem freiliegenden Oberflächenabschnitt des Tubenkörpers stoffschlüssig verbunden ist.

Bevorzugt ist der wenigstens eine Siegelstreifen ein Streifen mit einer durch Polyolefine gebildeten Oberfläche, wobei die Oberfläche bei Anordnung des Siegelstreifens am Tubenkörper mit der freiliegenden Oberfläche des Tubenkörpers in Kontakt ist. Wenngleich grundsätzlich die stoffschlüssige Verbindung des Siegelstreifens mit dem Tubenkörper durch Klebung erzielt werden kann, ist eine stoffschlüssige Verbindung durch thermisches Siegeln bevorzugt. An der Außenseite des Tubenkörpers ist im Falle der Ausbildung einer Stoß-Siegelnaht der vom Siegelstreifen kontaktierte Oberflächenabschnitt des Tubenkörpers bzw. der in Umfangsrichtung aufeinander zu verlaufenden Endbereiche des gerollten Tubenlaminat-Rohlings bevorzugt von Druckauftrag ausgespart, um eine Kontaktierung unmittelbar der Polymerschutzschicht durch den Siegelstreifen zu ermöglichen und so eine höhere Verbindungsfestigkeit des Siegelstreifens mit dem Tubenkörper zu erzielen.

Die vorliegende Erfindung betrifft außerdem eine Tube mit einem Tubenkörper, welcher wie vorstehend beschrieben ausgebildet ist.

Der Tubenkörper ist mit einem Tubenkopf verbunden, welcher wenigstens eine um die Tubenkörperlängsachse umlaufende freiliegende Oberfläche aus einem Polyolefin aufweist, wobei eine freiliegende Oberfläche des Tubenkörpers mit der umlaufenden freiliegenden Oberfläche des Tubenkopfes durch Siegeln stoffschlüssig verbunden ist.

Die vorliegende Anmeldung verwendet die Begriffe "Tubenbehälter" und "Tube" synonym.

Die vorliegende Erfindung wird nachfolgend anhand der beiliegenden Zeichnungen näher erläutert werden. Es stellt dar:
- Fig. 1: eine schematische Querschnittsansicht einer ersten Ausführungsform eines erfindungsgemäßen Tubenlaminats,
- Fig. 2: eine schematische Querschnittsansicht einer zweiten Ausführungsform eines erfindungsgemäßen Tubenlaminats,
- Fig. 3: eine schematische Querschnittsansicht einer ersten Ausführungsform eines Tubenkörpers bei Betrachtung einer zu einer Tubenkörperlängsachse orthogonalen Schnittebene,
- Fig. 4: eine schematische Querschnittsansicht einer zweiten Ausführungsform eines Tubenkörpers bei Betrachtung einer zu einer Tubenkörperlängsachse orthogonalen Schnittebene, und
- Fig. 5: eine grobschematische Aufrissansicht einer aus einem Tubenlaminat der Figuren 1 oder 2 gebildeten Tube.

Die Darstellungen in den Figuren sind nicht maßstabsgerecht.

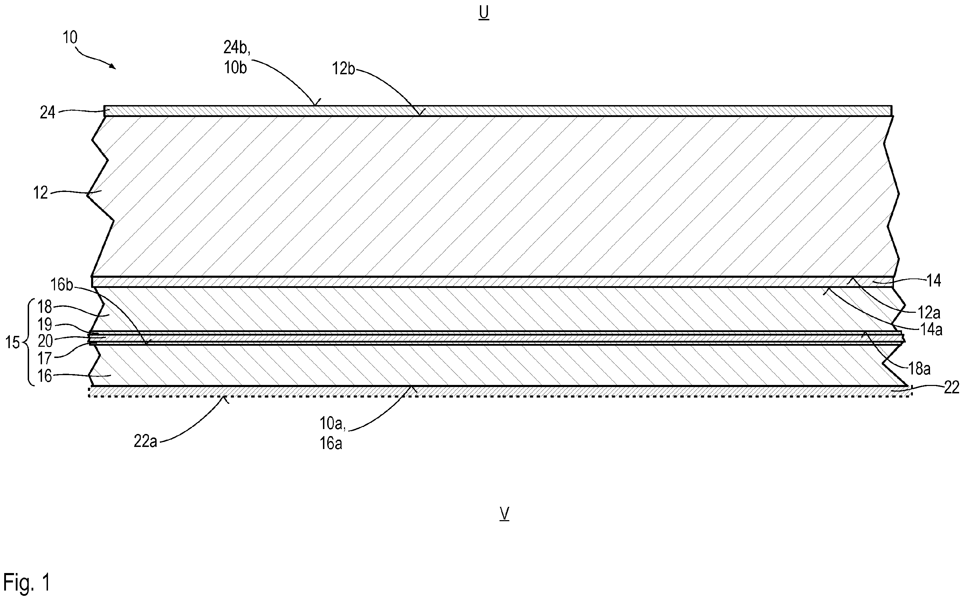

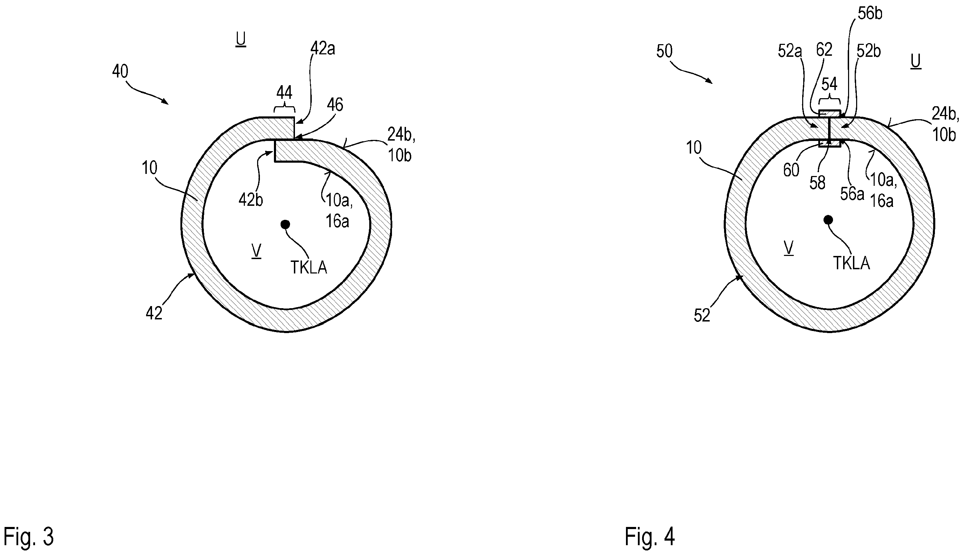

In Figur 1 ist eine erste Ausführungsform eines erfindungsgemäßen Tubenlaminats allgemein mit 10 bezeichnet. Das Tubenlaminat 10 weist eine zu einem Verpackungsraum V eines aus dem Tubenlaminat 10 gebildeten Tubenbehälters hinweisende Innenseite bzw. Innenoberfläche 10a und weist eine an dem aus dem Tubenlaminat 10 gebildeten Tubenbehälter zur Außenumgebung U freiliegende Außenseite bzw. Außenoberfläche 10b auf (siehe auch Fig. 3 und 4).

Das Tubenlaminat 10 der ersten Ausführungsform weist eine einzige Papierlage 12 mit einem bevorzugten Flächengewicht von 150 bis 200 g/m² auf. Auf ihrer einen Seite 12a ist auf die Papierlage 12 eine Lage 14 eines wasserbasierten Nasskaschierklebers, etwa auf Casein-Basis, drucktechnisch nass aufgetragen, etwa mit einer Walze.

Das Flächengewicht der Haftvermittlerlage 14 beträgt bevorzugt zwischen 2 und 10 g/m2.

Auf die von der Papierlage 12 abgewandten Seite 14a der Haftvermittlerlage 14 ist eine mehrschichtige kombinierte Barriere- und Siegelfolie 15 angeordnet, welche durch die Haftvermittlerlage 14 mit der Papierlage 12 verbunden ist.

Die kombinierte Barriere- und Siegelfolie 15 ist durch Coextrusion aller in ihr enthaltenen Schichten gebildet und weist eine siegelfähige Schicht 16 aus LMDPE oder aus einem Blend aus LMDPE und HDPE, eine Polyethylenschicht 18, bevorzugt aus einem Blend aus LMDPE und HDPE, und eine zwischen der siegelfähigen Schicht 16 und der Polyethylenschicht 18 angeordnete Barriereschicht 20 aus Ethylen-Vinylalkohol-Copolymer (EVOH) auf.

Lediglich der Vollständigkeit halber sei erwähnt, dass die Barriereschicht 20 sowohl mit der ihr zugewandten Oberfläche 16b der siegelfähigen Polyethylenschicht 16 als auch mit der ihr zugewandten Oberfläche 18a der Polyethylenschicht 18 durch je eine zwischenangeordnete Haftvermittlerschicht 17 bzw. 19 aus Maleinsäureanhydridbasiertem Haftvermittler verbunden ist.

Dann, wenn sowohl die siegelfähige Polyethylenschicht 16 als auch die Polyethylenschicht 18 aus einem HDPE-enthaltenden Blend gebildet sind, ist bevorzugt der HDPE-Gehalt, etwa in Gewichtsprozent, in der Polyethylenschicht 18 höher als in der siegelfähigen Polyethylenschicht 16. Durch den höheren HDPE-Gehalt soll die Polyethylenschicht 18 eine höhere Steifigkeit und eine niedrigere Wasserdampfdurchlässigkeit aufweisen als die siegelfähige Polyethylenschicht 16. Die Barriereschicht 20 aus EVOH verringert die Sauerstoffdurchlässigkeit der Barrierefolie 15 und die Polyethylenschichten 16 und 18, in höherem Umfang die Polyethylenschicht 18, verringern die Wasserdampfdurchlässigkeit der Barrierefolie 15.

Die kombinierte Barriere- und Siegelfolie 15 weist eine Dicke im Bereich von 30 bis 70 µm, vorzugsweise von 40 bis 60 µm, auf.

Die siegelfähige Schicht 16 weist selbst eine siegelfähige Oberfläche 16a auf, welche die zum Verpackungsraum V freiliegende Oberfläche 10a des Tubenlaminats 10 bildet. Auf die Schicht 16, genauer auf ihre von der Papierlage 12 wegweisende und dem Verpackungsraum V näher liegende Oberfläche 10a, kann alternativ eine in Figur 1 lediglich strichpunktiert angedeutete siegelfähige Polymerlage 22 aus Cyclo-Olefin-Copolymer (COC) ausgebildet sein, beispielsweise mit einer Lagendicke von 5 bis 20 µm. Die Polymerlage 22 kann auf die Oberfläche 10a der LDPE-Folie 16 aufextrudiert sein. In diesem Falle würde die dem Verpackungsraum V näher liegende Oberfläche 22a der Polymerlage 22 aus COC die zum Verpackungsraum V hin freiliegende Oberfläche des Tubenlaminats 10 bilden. Wenn jedoch bereits die siegelfähige Schicht 16 mit einer siegelfähigen Oberfläche ausgebildet ist, ist bevorzugt die siegelfähige Oberfläche 16a auch die zum Verpackungsraum V hin freiliegende Oberfläche 10a des Tubenlaminats 10.

Auf seiner anderen Seite 12b ist auf die Papierlage 12 eine Polymerschutzschicht 24 aufgetragen, welche vorzugsweise aus Ethylen-Methacrylsäure-Copolymer gebildet ist, und zwar mit einer bevorzugten Dicke von 1 bis 2,5 g/m², besonders bevorzugt von etwa 2 g/m². Die Polymerschutzschicht 14 schützt die Papierlage 12 vor Einflüssen aus der Außenumgebung U und ermöglicht gleichzeitig aufgrund ihrer geringen Dicke eine strahlungstechnische Erkennung der Papierlage 12, was eine automatisierte Zuführung des Tubenlaminats 10 zu einem Papier zugeordneten Recyclingstrom ermöglicht.

Die Polymerschutzschicht 24 ist drucktechnisch aufgetragen, beispielsweise durch eine Druckwalze. Der Auftrag erfolgt folglich nass.

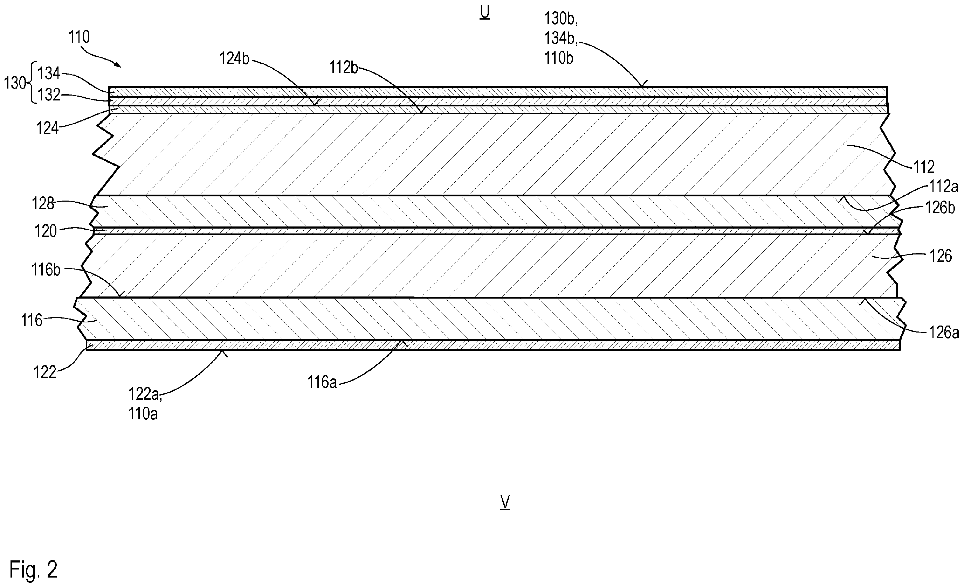

In Figur 2 ist eine alternative zweite Ausführungsform eines erfindungsgemäßen Tubenlaminats 110 im Querschnitt dargestellt. Gleiche und funktionsgleiche Bauteile und Bauteilabschnitte wie in Figur 1 sind in Figur 2 mit gleichen Bezugszeichen versehen, jedoch erhöht um die Zahl 100. Die in Figur 2 dargestellte zweite Ausführungsform wird nachfolgend nur insofern beschrieben werden, als sie sich von der ersten Ausführungsform unterscheidet, auf deren Beschreibung ansonsten auch zur Erläuterung der zweiten Ausführungsform ausdrücklich verwiesen wird.

Das Tubenlaminat 110 der zweiten Ausführungsform weist nicht nur eine Papierlage 112 auf, sondern weist darüber hinaus eine zweite Papierlage 126 auf. Die zweite Papierlage 126 weist auf ihrer zur Außenumgebung U hinweisenden Seite 126b die Barrierelage 120 als Lage aus Polyvinylalkohol (PVOH) auf.

Die Papierlage 112 und die zweite Papierlage 116 mit der auf letzterer angeordneten Barrierelage 118 sind durch Extrusionskaschierung mittels einer Extrusionskaschierlage 128 aus Polyethylen und/oder Ethylen-basierten Copolymeren verbunden. Die Extrusionskaschierlage 128 zur Verbindung der beiden Papierlagen 112 und 126 weist ein Flächengewicht von zwischen 10 g/m² und 30 g/m² auf.

Die Papierlage 112 weist ein Flächengewicht von zwischen 40 g/m² und 150 g/m² auf. Die zweite Papierlage 126 weist ebenfalls ein Flächengewicht von zwischen 40 g/m² und 150 g/m² auf, was jedoch nicht bedeutet, dass die erste und die zweite Papierlage 112 bzw. 126 stets das gleiche Flächengewicht aufweisen müssen.

Die Polyethylenlage 116 ist im vorliegenden zweiten Ausführungsbeispiel nicht wie im ersten Ausführungsbeispiel als Blasfolie oder Cast-Folie angeordnet, sondern ist mit der siegelfähigen Lage 122 aus COC coextrudiert. Die beiden Lagen 116 und 122 weisen zusammen eine Lagenanordnungsdicke von zwischen 20 µm bis 50 µm auf. Die Lage 116 kann, wie im ersten Ausführungsbeispiel aus LMDPE oder aus einem Blend aus LMDPE und HDPE gebildet sein, ist jedoch aus prozesstechnischen Erwägungen der Coextrusion bevorzugt aus LDPE oder noch stärker bevorzugt aus LLDPE ausgebildet. Die freiliegende Oberfläche 122a der siegelfähigen COC-Lage 122 bildet die Innenfläche 110a des Tubenlaminats 110 der zweiten Ausführungsform.

Auf der von der Papierlage 112 weg weisenden Oberfläche 124b der Polymerschutzschicht 124 ist ein Druckauftrag 130 drucktechnisch aufgetragen. Dieser Druckauftrag 130 weist einen Lagenbereich mit einem Druckfarbenauftrag 132 und einen den Druckfarbenauftrag 132 zur Außenumgebung U hin bedeckenden Überdrucklack 134 auf Acrylbasis auf. Der Druckfarbenauftrag 132 befindet sich daher zwischen dem Überdrucklack 134 und der Polymerschutzschicht 124. Eine zur Außenumgebung U hinweisende freiliegende Oberfläche 134b des Überdrucklacks bildet die Außenfläche 110b des Tubenlaminats 110 der zweiten Ausführungsform.

Der Druckauftrag 130 weist eine Dicke von weniger als 3 µm auf.

Trotz des Druckauftrags 130 auf der Polymerschutzschicht 124 ist der Abstand zwischen der Außenfläche 110b des Tubenlaminats und der zur Außenumgebung U hinweisenden Oberfläche 112b der der Außenumgebung nächstgelegenen Papierlage 112 so gering, maximal 5 bis 7 µm, dass eine Erkennung des Tubenlaminats 110 als papierhaltig durch eine Bestrahlung mit Strahlung im Wellenlängenbereich von Nah-Infrarot problemlos möglich ist.

In Figur 3 ist grobschematisch ein Querschnitt einer ersten Ausführungsform eines Tubenkörpers 40 gezeigt, welcher aus dem Tubenlaminat 10 des ersten Ausführungsbeispiels von Figur 1 gebildet ist. Der Tubenkörper 40 erstreckt sich in der Darstellung als idealisiert-zylindrischer Tubenkörper 40 längs einer Tubenkörperlängsachse TKLA, welche orthogonal zur Zeichenebene der Fig. 3 verläuft.

Ein Tubenkörper-Rohling 42 des Tubenlaminats 10 ist in Umfangsrichtung um die Tubenkörperlängsachse TKLA gerollt, wobei sich nach dem Rollen in Umfangsrichtung aufeinander zu weisende Endbereiche 42a und 42b des Tubenkörper-Rohlings 42 in einem Überlappungsbereich 44 überlappen. Im Überlappungsbereich 44 liegt die siegelfähige Innenfläche 10a des Tubenlaminats 10 auf der durch die Polymerschutzschicht 24 gebildeten Außenseite 10b auf. Aufgrund der Materialwahl, beispielsweise LDPE, LLDPE oder COC für die Innenfläche 10a des Tubenlaminats 10 und Ethylen-Methacrylsäure-Copolymer für die Polymerschutzschicht 24 sind die Innenfläche 10a und die Außenfläche 10b miteinander thermisch siegelbar, sodass im Überlappungsbereich 44 eine Überlapp-Siegelnaht 46 gebildet werden kann, durch welche die Innenfläche 10a und die Außenfläche 10b des Tubenlaminats 10 stoffschlüssig miteinander verbunden werden können.

Die Überlapp-Siegelnaht 46 erstreckt sich über den gesamten Überlappungsbereich 44, also im Wesentlichen über die gesamte axiale Länge des Tubenkörpers 40 bezüglich der Tubenkörperlängsachse TKLA und in Umfangsrichtung längs der tatsächlich bestehenden Überlappung der beiden Endbereiche 42a und 42b des Tubenkörper-Rohlings 42.

In Figur 4 ist grobschematisch ein Querschnitt einer zweiten Ausführungsform eines Tubenkörpers 50 gezeigt, welcher wiederum aus dem Tubenlaminat 10 des ersten Ausführungsbeispiels von Figur 1 gebildet ist. Auch der Tubenkörper 50 der zweiten Ausführungsform erstreckt sich in der Darstellung als idealisiert-zylindrischer Tubenkörper 50 längs einer Tubenkörperlängsachse TKLA, welche orthogonal zur Zeichenebene von Figur 4 verläuft. Der Tubenkörper 50 von Fig. 4 ist gegenüber dem Tubenkörper 40 von Fig. 3 aufgrund der erwarteten höheren Verbindungssicherheit bevorzugt.

Ein Tubenkörper-Rohling 52 des Tubenlaminats 10 ist wiederum in Umfangsrichtung um die Tubenkörperlängsachse TKLA gerollt, wobei sich nach dem Rollen in Umfangsrichtung aufeinander zu weisende Endbereiche 52a und 52b des Tubenkörper-Rohlings 52 unter Bildung einer längs der Tubenkörperlängsachse TKLA, bevorzugt sogar parallel zu dieser, erstreckenden Stoßfuge 58 Stoß an Stoß stumpf gegenüberliegen. Eine Überlappung der Endbereiche 52a und 52b findet folglich nicht statt.

Die Stoßfuge 58 ist zu ihren beiden radialen Seiten mit je einem Siegelstreifen 60 bzw. 62 derart abgedeckt, dass sich jeder Siegelstreifen längs der Stoßfuge 58 über im Wesentlichen ihre gesamte axiale Länge bezüglich der Tubenkörperlängsachse TKLA und in Umfangsrichtung die Stoßfuge 58 überspannend auf die freiliegenden Oberflächen der Endbereiche 52a und 52b erstreckt. Folglich überlappen die Siegelstreifen 60 und 62 die Endbereiche 52a und 52b in einem Überlappungsbereich 54.

Der radial innere Siegelstreifen 60, dessen Längsrichtung ebenfalls orthogonal zur Zeichenebene der Figur 4 verläuft, kontaktiert die Innenfläche 10a des Tubenlaminats 10 in den beiden Umfangsendbereichen 52a und 52b. Der radial äußere Siegelstreifen 62, dessen Längsrichtung ebenfalls orthogonal zur Zeichenebene der Figur 4 verläuft, kontaktiert die Außenfläche 10b des Tubenlaminats 10 in den beiden Umfangsendbereichen 52a und 52b.

Die Siegelstreifen 60 und 62 sind vorzugsweise identisch aufgebaut. Sie weisen auf ihrer den Tubenkörper 50 kontaktierenden Seite eine siegelfähige Lage aus einem Polyolefin, bevorzugt aus Polyethylen, wie etwa LDPE und LLDPE, auf. Die siegelfähige Lage aus Polyolefin kann durch eine Substratlage stabilisiert sein. Beispielsweise aus einer Lage aus Polyolefin, wie etwa HDPE oder BoPP.

Die Siegelstreifen 60 und 62 sind jeweils mit der von Ihnen kontaktierten Oberfläche des Tubenlaminats 10 bzw. des Tubenkörpers 50 durch thermisches Siegeln stoffschlüssig verbunden. Der Siegelstreifen 60 bildet mit der Innenfläche 10a des Tubenlaminats 10 an den Endbereichen 52a und 52b eine die Stoßfuge 58 überspannende Teil-Stoß-Siegelnaht 56a, während der Siegelstreifen 62 mit der Außenfläche 10b des Tubenlaminats 10 an den Endbereichen 52a und 52b eine die Stoßfuge 58 überspannende Teil-Stoßsiegelnaht 56b bildet. Die Teil-Stoß-Siegelnähte 56a und 56b bilden gemeinsam eine Stoß-Siegelnaht.

Sofern die Außenseite 10b des Tubenlaminats 10 durch einen Druckauftrag gebildet ist, ist dieser im Überlappungsbereich 44 auf dem radial inneren überlappenden Endabschnitt 42b bzw. im Überlappungsabschnitt 54 ausgespart, damit sich dort siegelfähige Polymeroberflächen unmittelbar berühren können.

Die Tubenkörper 40 und 50 der Fig. 3 bzw. 4 können statt mit dem Tubenlaminat 10 des ersten Ausführungsbeispiels mit dem Tubenlaminat 110 des zweiten Ausführungsbeispiels gebildet sein.

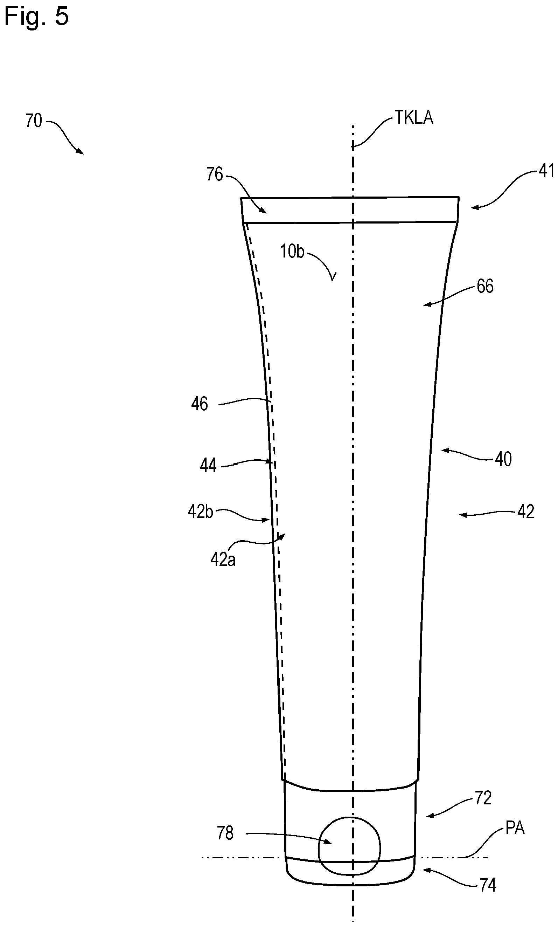

Figur 5 zeigt eine schematische Vorderansicht eines Tubenbehälters 70, der einen Tubenkörper 40 aus dem mehrlagigen Tubenlaminat 10 und eine Schulter 72 aufweist, wobei die Schulter 72 im dargestellten Beispiel einstückig mit einem schwenkbaren Deckel 74 ausgebildet ist, auf dem der Tubenbehälter 70 stehen kann. Alternativ kann der Tubenkörper 40 auch aus der zweiten Ausführungsform des mehrlagigen Tubenlaminats 110 hergestellt sein. Ebenso könnte anstelle des Tubenkörpers 40 mit Überlapp-Siegelnaht ein Tubenkörper 50 mit Stoß-Siegelnaht am Tubenbehälter 70 Anwendung finden. Letzteres ist sogar bevorzugt.

Wie bereits im Zusammenhang mit den Figuren 3 und 4 beschrieben, wird zur Herstellung des Tubenkörpers 40 ein Zuschnitt bzw. Rohling 42 des mehrlagigen Tubenlaminats 10 so um einen Dorn gerollt, dass sich die in Umfangsrichtung endseitigen Endbereiche 42a und 42b des gerollten Rohlings 42 überlappen. In dem so entstandenen Überlappungsbereich 44 überlappt die Innenfläche 10a die Außenfläche 10b axial entlang der Tubenkörperlängsachse TKLA und in Umfangsrichtung um die Tubenkörperlängsachse TKLA. Die beiden Endbereiche 42a und 42b werden im Überlappungsbereich 44 durch Heißsiegeln verbunden, um die beschriebene Überlapp-Siegelnaht 46 zu bilden.

An dem der Schulter 72 abgewandten Längsende 41 ist der Tubenkörper 40 durch eine Fin-Siegelnaht 76 verschlossen. Anders als in der Überlapp-Siegelnaht 46, wo die Innenfläche 10a mit der Außenfläche 10b des Tubenlaminats 10 gesiegelt ist, sind in der Fin-Siegelnaht 76 einander gegenüberliegende Bereiche der Innenfläche 10a miteinander gesiegelt.

Der Tubenkörper 40 umschließt am Längsende nahe der Schulter 72 einen Teil der Schulter 72 und überlappt diesen Teil in axialer Richtung bezüglich der Tubenkörperlängsachse TKLA und in Umfangsrichtung vollständig. Die überlappenden Teile des Tubenkörpers 40 und der Schulter 72 sind ebenfalls durch Heißsiegeln verbunden. Zu diesem Zweck ist die Schulter 72 bevorzugt aus spritzgegossenem Polyethylen geformt, so dass die Materialien der Schulter 72 und der siegelfähigen Schicht 16 oder 22 des mehrlagigen Tubenlaminats 10, welche die Innenfläche 10a des Tubenlaminats 10 bilden, miteinander kompatibel sind.

Der Deckel 74 ist um eine Schwenkachse PA schwenkbar, z. B. durch ein Foliengelenk, das den Deckel 74 einstückig mit der Schulter 72 verbindet. Eine Vertiefung 78 erleichtert das Greifen und Abheben des Deckels 74 von der Schulter 72, um den Tubenbehälter 70 zu öffnen.

Anstelle eines einstückig mit der Schulter 72 verbundenen Deckels 74 kann der Deckel gesondert von der Schulter gebildet und beispielsweise auf diese aufschraubbar und von dieser abschraubbar sein.

## Patentansprüche

1. Mehrlagiges Tubenlaminat (10; 110) zur Herstellung eines Tubenbehälters (70), umfassend
- wenigstens eine Papierlage (12; 112, 126),
- eine siegelfähige freiliegende Polymerlage (16, 22; 122) auf einer Seite (12a; 126a) der wenigstens einen Papierlage (12; 112, 126), und
- eine auf einer von der siegelfähigen Polymerlage (16, 22; 122) abgewandten anderen Seite (12b; 112b) der wenigstens einen Papierlage (12; 112, 126) unmittelbar auf die wenigstens eine Papierlage (12; 112, 126) aufgetragene Polymerschicht (24; 124) aus einem Material auf Olefinbasis,
**dadurch gekennzeichnet, dass** die Polymerschicht (24; 124) eine Polymerschutzschicht (24; 124) mit einem Flächengewicht im Bereich von 0,5 g/m² bis 4,9 g/m² ist, und wobei die Polymerschutzschicht (24; 124) entweder nach außen freiliegt oder einen Druckauftrag (130) trägt.

2. Mehrlagiges Tubenlaminat (10; 110) nach Anspruch 1,
**dadurch gekennzeichnet, dass** die Polymerschutzschicht (24; 124) wenigstens ein säure-modifiziertes Olefin umfasst oder aus einem solchen besteht.

3. Mehrlagiges Tubenlaminat (10; 110) nach Anspruch 1,
**dadurch gekennzeichnet, dass** die Polymerschutzschicht (24; 124) ein Flächengewicht im Bereich von 1 g/m² bis 2,5 g/m² aufweist.

4. Mehrlagiges Tubenlaminat (110) nach einem der Ansprüche 1 bis 3,
**dadurch gekennzeichnet, dass** die Polymerschutzschicht (124) einen Druckauftrag (130) trägt, welcher aus einer Lage (134) Überdrucklack und einem zwischen der Überdrucklack-Lage (134) und der Polymerschutzschicht (124) angeordneten Lagenbereich (132) aus Druckfarben gebildet ist, wobei der Überdrucklack mit seiner von der wenigstens einen Papierlage (12; 112, 126) abgewandten Oberfläche (130b) freiliegt.

5. Mehrlagiges Tubenlaminat (10; 110) nach Anspruch 4,
**dadurch gekennzeichnet, dass** der Druckauftrag (130) eine Dicke von weniger als 3 µm aufweist.

6. Mehrlagiges Tubenlaminat (10; 110) nach Anspruch 4 oder 5,
**dadurch gekennzeichnet, dass** der Überdrucklack ein Lack auf Acrylbasis ist.

7. Mehrlagiges Tubenlaminat (10; 110) nach einem der vorhergehenden Ansprüche,
**dadurch gekennzeichnet, dass** die siegelfähige freiliegende Polymerlage (16, 22; 122) ein Polyethylen oder/und ein Cyclo-Olefin-Copolymer umfasst oder aus einem solchen Werkstoff besteht.

8. Mehrlagiges Tubenlaminat (10; 110) nach einem der vorhergehenden Ansprüche,
**dadurch gekennzeichnet, dass** das Tubenlaminat (10; 110) wenigstens eine Barrierelage (20; 120) zur Reduzierung einer Sauerstoffdurchlässigkeit oder/und einer Wasserdampfdurchlässigkeit des Tubenlaminats (10; 110) aufweist, wobei die wenigstens eine Barrierelage (20; 120) ein Vinylalkohol-Polymer oder/und eine Metallisierung oder/und ein Metalloxid umfasst oder aus einem solchen Material gebildet ist.

9. Mehrlagiges Tubenlaminat (10; 110) nach einem der vorhergehenden Ansprüche,
**dadurch gekennzeichnet, dass** das Tubenlaminat (10; 110) ein Flächengewicht im Bereich von 200 g/m² bis 450 g/m² aufweist.

10. Mehrlagiges Tubenlaminat (10; 110) nach einem der vorhergehenden Ansprüche,
**dadurch gekennzeichnet, dass** das Flächengewicht der wenigstens einen Papierlage (12; 112, 126) im Tubenlaminat im Bereich von 80 g/m² bis 350 g/m² liegt.

11. Mehrlagiges Tubenlaminat (10; 110) nach einem der vorhergehenden Ansprüche,
**dadurch gekennzeichnet, dass** der Gewichtsanteil der wenigstens einen Papierlage (12; 112, 126) am flächenbezogenen Gesamtgewicht des Tubenlaminats (10; 110) wenigstens 75 % beträgt,

12. Mehrlagiges Tubenlaminat (110) nach einem der vorhergehenden Ansprüche, unter Einbeziehung des Anspruchs 8,
**dadurch gekennzeichnet, dass** das Tubenlaminat (110) mehr als eine Papierlage (112, 126) aufweist, wobei eine der Papierlagen (112, 126) die Barrierelage (120) trägt.

13. Tubenkörper (40; 50), welcher aus einem Tubenlaminat (10; 110) der Ansprüche 1 bis 12 gebildet ist, wobei der Tubenkörper (40; 50) einen Tubenlaminat-Rohling (42; 52) umfasst, welcher um eine Tubenkörperlängsachse (TKLA) herum gerollt ist, wobei in Umfangsrichtung um die Tubenkörperlängsachse (TKLA) aufeinander zu weisende Endbereiche (42a, 42b; 52a, 52b) des Tubenlaminat-Rohlings (42; 52) durch Siegeln unter Ausbildung einer in Richtung längs der Tubenkörperlängsachse (TKLA) verlaufenden Siegelnaht (46; 56a, 56b) miteinander verbunden sind, wobei die Siegelnaht (46; 56a, 56b) entweder
i) eine Überlapp-Siegelnaht (46) ist, bei welcher die siegelfähige Polymerlage (16, 22; 122) die Polymerschutzschicht (24; 124) in einem Überlappungsbereich (44) überlappt, wobei der Überlappungsbereich (44) sich in Umfangsrichtung und in Richtung längs der Tubenkörperlängsachse (TKLA) erstreckt und wobei die siegelfähige Polymerlage (16, 22; 122) und die Polymerschutzschicht (24; 124) im Überlappungsbereich (44) miteinander stoffschlüssig verbunden sind,
oder
ii) eine Stoß-Siegelnaht (56a, 56b) ist, bei welcher die aufeinander zu weisenden Endbereiche (42a, 42b; 52a, 52b) unter Bildung einer in Richtung längs der Tubenkörperlängsachse (TKLA) und radial von der Tubenkörperlängsachse weg verlaufenden Stoßfuge (58) einander angenähert sind, wobei die Stoßfuge (58) auf wenigstens einer radialen Seite bezüglich der Tubenkörperlängsachse (TKLA) durch einen Siegelstreifen (60, 62) überdeckt ist, welcher sich längs der Stoßfuge (58) erstreckt, die Stoßfuge (58) in Umfangsrichtung überspannt und zu beiden Umfangsseiten der Stoßfuge (58) mit je einem freiliegenden Oberflächenabschnitt des Tubenlaminats (10; 110) in den Endbereichen (42a, 42b; 52a, 52b) stoffschlüssig verbunden ist.

14. Tube (70) mit einem Tubenkörper (40; 50) gemäß Anspruch 13 und weiter mit einem mit dem Tubenkörper (40; 50) verbundenen Tubenkopf (72), welcher wenigstens eine um die Tubenkörperlängsachse (TKLA) umlaufende freiliegende Oberfläche aus einem Polyolefin aufweist, wobei eine freiliegende Oberfläche des Tubenkörpers (40; 50) mit der umlaufenden freiliegenden Oberfläche des Tubenkopfes (72) durch Siegeln stoffschlüssig verbunden ist.
